Europäisches Patentamt

European Patent Office

Office européen des brevets

(11) Veröffentlichungsnummer: **0 063 171**
**B1**

(12) **EUROPÄISCHE PATENTSCHRIFT**

(45) Veröffentlichungstag der Patentschrift:
19.03.86

(51) Int. Cl.⁴: **B 01 F 7/18,** B 01 F 15/00

(21) Anmeldenummer: **81105898.1**

(22) Anmeldetag: **25.07.81**

(54) Rührvorrichtung.

(30) Priorität: **15.04.81 DE 8111381 U**

(43) Veröffentlichungstag der Anmeldung:
**27.10.82 Patentblatt 82/43**

(45) Bekanntmachung des Hinweises auf die Patenterteilung:
**19.03.86 Patentblatt 86/12**

(84) Benannte Vertragsstaaten:
**AT BE CH DE FR GB IT LI LU NL SE**

(56) Entgegenhaltungen:
**CA - A - 1 124 709
DE - A - 2 643 560
DE - A - 2 702 795
FR - A - 1 128 500
FR - A - 1 271 334
FR - A - 2 121 014
FR - A - 2 317 068
GB - A - 1 039 682
GB - A - 1 400 257
US - A - 3 273 863**

(73) Patentinhaber: **Stelzer Rührtechnik GmbH,
Heideweg 12, D-3530 Warburg (DE)**

(72) Erfinder: **Stelzer, Erwin, Pappenheimerstrasse 47,
D-3530 Warburg (DE)**

(74) Vertreter: **Olbricht, Karl Heinrich, Dipl.-Phys., Am
Weinberg 15, D-3556 Niederweimar (DE)**

LIBER, STOCKHOLM 1986

## Beschreibung

Die vorliegende Erfindung betrifft eine Vorrichtung gemäß dem Oberbegriff des Anspruchs 1. Sie findet Anwendung in der Verfahrenstechnik.

Eine Vorrichtung dieser Art ist in der FR-A-2 121 014 beschrieben, die sich mit Reaktoren für Polymere befaßt, insbesondere für Polyäthylen niedriger Dichte.Die Vorrichtung dient zur kontinuierlichen Vermischung fließfähiger Komponenten, wobei die Länge des Behälters erheblich größer als sein Durchmesser ist und das Rückflußverhältnis bei 40% liegen soll. Entlang der Mischwelle sind abwechselnd entgegen gesetzt angestellte Sterne aus achsnahen gewöbelten Paletten und aus auf Radialarmen sitzenden ebenen Blättern angeordnet, die am Umfang der Kontur des zylindrischen Behälters angepaßt sind. An dessen Innenwand gehen diese Blätter, die den Querschnitt des Reaktors möglichst abdecken, in geringem Abstand abstreiferartig vorbei. Die Material-Zufuhr und -Abfuhr erfolgt nahe der Rührwelle durch axialgerichtete Rohre. Eine solche Vorrichtung ist nicht dazu geeignet, feste Komponenten gleichmäßig mit einer flüssigen bzw. fließfähigen Komponente zu verrühren. Zum einen ist shon die Zufuhr der Bestandteile problematisch, denn die eine Komponente wird bei dem bekannten Reaktor durch ein bis fast zum Behälterboden reichendes Zentralrohr großen Durchmessers und die zweite Komponente durch eine seitlichte Stichleitung in der oberen Hälfte des Behälters kontinuierlich zugeführt, was entsprechende Verteilbarkeit beider Komponenten voraussetzt. Ferner nimmt das Zentralrohr nahezu ein Drittel des Behälterdurchmessers ein, so daß nur eine beschränkte Ringzone für die Bewegung des Mischgutes zur Verfügung steht. Diese im wesentlichen nur axial fördere Anordnung ist für den vorgeschenen Flüssigkeits-Durchlauf braushbar, kann aber nicht zum längerdauernden Homogenisieren, suspendieren und Wärmeaustausch von Substraten unterschiedlichen Aggregatzustandes benutzt werden.

Gemäß der FR-A-1 271 334 ist in einem zylindrischen Behälter eine exzentrisch angeordnete Rührwelle angeordnet, die an Radialarmen in Axial- und Umfangswinkel-Abständen versetzt ebene Kreisbogenpaletten trägt. Der Behälter steht schräg, und das von Wendeln des Rührwerkzeugs wandnah etwa axial geförderte pulvrige oder körnige Nischgut soll von den Paletten auf Parabelbahnen in den obereb Innenraum des Behälters geschleudert werden, von wo es auf die Rührwelle zu und nach unten zurückströmt. In konstruktiver Hinsicht wie in der Funktion ähnelt die Anordnung liegenden Mischern, bei denen besondere Bedingungen herrschen.

Bei liegendem Behälter und horizontaler Mischwelle ergibt es sich zwangsläufig, daß die Mischwerkzeuge bei jeder Umdrehung aus dem Mischgut aus- und wieder eintauchen. Die Mischwerkzeuge müssen so angeordnet und gestaltet sein, daß sie sich absetzende Mischgut von der unteren Behälterwand aufnehmen und möglichst im Behälter herumschleudern können. Entsprechende Vorrichtungen haben daher überwiegend Mischschaufeln, die in geringem Abstand an der Behälterwand entlang umlaufen und weitgehend die Funktion eines Abstreifers für Feststoffe haben, die sich leicht in unteren Behälterteil an oder nahe der Wand anlagern. Eine rauhe Behandlung des meist aus körnigem Material bestehenden Mischguts (etwa Beton) ist dabei ausdrücklich erwünscht.

Bei empfindlicheren Staffen hingegen stellen sich besondere Aufgabenkombination, die mit den erwähnten herkömmlichen Mitteln nicht oder nur schlecht bewältigt werden können. Ein Beispiel ist die gleichzeitige Durchführung der Schritte des Homogenisierens, des Suspendierens und des Wärmeübergangs, etwa bei der Suppenherstellung, wofur besonderer Bedarf an einer hinreichend wirksamen einfachen Rührwerkskonstruktion besteht. Hiermmuß nämlich einerseits dafür gesorgt werden, daß verschiedene Flüssigkeiten (Wasser, fetthaltige Bruhe usw.) homogen verteilt werden, damit in jeder Abfüllmenge - z.B. in Konservendosen - gleichartiger Inhalt zur Verfügung steht. Andererseits müssen Feststoffe wie Salz, Pektin u.a. gelöst werden.während weitere feste Bestandteilebeispielsweise Stücke von Karotten, Kartoffeln u.dgl. - gleich-mäßig, zu suspendieren sind. Überdies ist ein guter Wärmeübergang nötig, um die Behandlungsdauer möglichst abzukürzen. Auch darf eine Krustenbildung nicht auftreten; daher muß das Rührwerk wandnah arbeiten.

Aufgrund dieser und anderer vielfältiger Anforderungen sind übliche Rührwerke nicht oder nicht gut für die Durchmischung solcher Substratgemische geeignet. Es ist deshalb ein wichtiges Ziel der Erfindung, mit wirtschaftlichen Mitteln eine verbesserte Vorrichtung zu schaffen, die gerade beim niedertourigen Verrühren derartiger Substratgemische einerseits eine optimale Rührwirkung, andererseits eine schonende Behandlung gewärleistet. Speziell soll damit empfindliches Rührgut wie organische Stoffe, Suppen u.dgl. im Kessel zentral gerührt werden können, ohne daß der Inhalt bloß umgewälzt würde.

Ein Hauptmerkmal der Erfindung ist im kennzeichnenden Teil des Anspruch 1 angegeben. Die so aufgebaute Vorrichtung ist extrem einfach und mithin sehr kostensparend herstellbar. Sie kann mit niedriger Drehzahl umlaufen, z.B. zwischen 5 und 100 U/min, und ermöglicht somit das niedertourige Verrühren von Substratgemischen, insbesondere mit gleichzeitigem Homogenisieren, suspendieren und Wärmeaustausch bei möglichst schonender Behandlung des Rührguts. Es werden an sich bekannte Palettenrührer verwendet, die blattförmig ausgebildet sind und unter einem Anstellwinkel zur Achse der langs m umlaufenden Rührwelle stehen. Zum Unterschied von üblichen Wendelrührern, die - wie die Vorrichtung gemäß der FR-A-2 121 014 - im wesentlichen bloß axial fördern, so daß die von der Mischzone entfernteren Bereiche des Rührguts sozusagen durchrutschen und "stehenbleiben" können, sind erfindungsgemäß Bogensegmente vorhanden, nämlich ebene oder gewölbte Wendelabschnitte oder ebene Kreisringausschnitte mit einem Zentriwinkel zwischen 90° und 150° vorzugsweise etwa 120°. Hiermit ist also eine spezielle Auswahl getroffen, die sich von der Mischtechnik vor allen durch die vertikale Anordnung und von den herkömmlichen Rührwerken durch hierbei bislang nicht gebräuchliche Bogensegmente unterscheidet, wobei die sie tragenden Radialarme selbst Rührelemente sind. Damit ist bei niedrigen Drehzahlen das gleichzeitige Auftreten mehrerer Förderrichtungen gewährleistet, d.h. sowohl axial als auch tangential als auch radial. Trotz ihres einfachen Aufbaues erfaßt die neuartige Vorrichtung infolge der auch in den Randzonen wirksamen Kombination von Strömungskomponenten selbst hochviskose Grenzbereiche. In üblichen Substratgemischen können z.B. Viskositäten von 1 bis 100 Pa.s vorkommen, die mit der erfindungsgemäßen Vorrichtung problemlos bewältigt werden, so daß sich eine überaus gleichmäßige Durchmischung bei günstigen Werten der aufgenommen Leistung ergibt.

An den Radialarmen gemäß Anspruch 2 angebrachte zusätzliche Segmente können nach Art eines Balkenrührers zum schnellen, thermisch günstigen Vermischen des Rührguts beitragen. Durch geeignete Gestaltung der Radialarme etwa als Winkelsegmente, Faltprofilleisten o.dgl. und/oder durch zusätzliche Befestigung weiterer Rührelemente können im Inneren des von den Bogensegmenten gebildeten Wendelbereichs zusätzliche Strömungssteuerungen bewirkt werden.

Sehr günstig ist es, wenn gemäß den Ansprüchen 3 und 4 benachbarte und/oder übereinander angeordnete Rührwerkzeuge als Gruppe zusammenwirken. Hierbei können radiale Versetzungen zu Kreuzanordnungen führen.

Es ist auch möglich und erfindungsgemäß vorgesehen, zumindest mit dem untersten Rührwerkzeug eine Verwirbelungseinrichtung nach Anspruch 5 zusammenwirken zu lassen, die ein Absetzen von Festteilen am Boden bzw. in Bodennähe mit Sicherheit unterbindet.

Die in Anspruch 6 angegebene Konstruktion sieht blattförmige Elemente vor, die sich schräg gegenüberstehen und so eine gemeinsame Wendelbahn bilden. Sie können für optimalen Effekt verwundene bzw. gewölbte Flächen haben, doch sind ebene Bogensegmente kostengünstiger herstellbar und für viele Anwendungen ebenfalls geeignet. Weitere Ausgestaltungen laut den Ansprüchen 7 und 8 gewährleisten, daß hinsichtlich der Axialströmung trotz an sich unterbrochener Wendelbahn deren Förderwirkung (z.B. von unten nach oben) dennoch praktisch unverädert erhalten bleibt. Abschnitte einer zweiten, inneren Wendel verschaffen der erfindungsgemäßen Vorrichtung Eigenschaften, welche die Vorteile eines Doppelwendelrührers noch deutlich übertreffen.

Die Leistungsaufnahme und die Rührwirkung lassen sich durch Einstellen des Segment-Anstellwinkels zur Rührwelle gemäß Anspruch 9 steuern. Allgemein kann vorteilhaft sein, Strömungsbrecher nach Anspruch 10 vorzusehen, die zur zusätzlichen Verwirbelung beitragen.

Weitere Merkmale, Einzelheiten und Vorteile der Erfindung ergeben sich aus den Ansprüchen sowie aus der folgenden Erläuterung von bevorzugten Ausführungsbeispielen anhand der Zeichnung. Darin zeigen:

Fig. 1 eine Teil-Ansicht einer erfindungsgemäßen Vorrichtung,

Fig. 2 eine Teil-Ansicht einer anderen Ausführungsform einer Vorrichtung nach der Erfindung,

Fig. 3 eine Teil-Ansicht einer weiteren Ausführungsform der erfindungsgemäßen Vorrichtung und

Fig. 4 eine Ansicht, teilweise im Schnitt, noch einer anderen Ausführungsform der erfindungsgemäßen Vorrichtung.

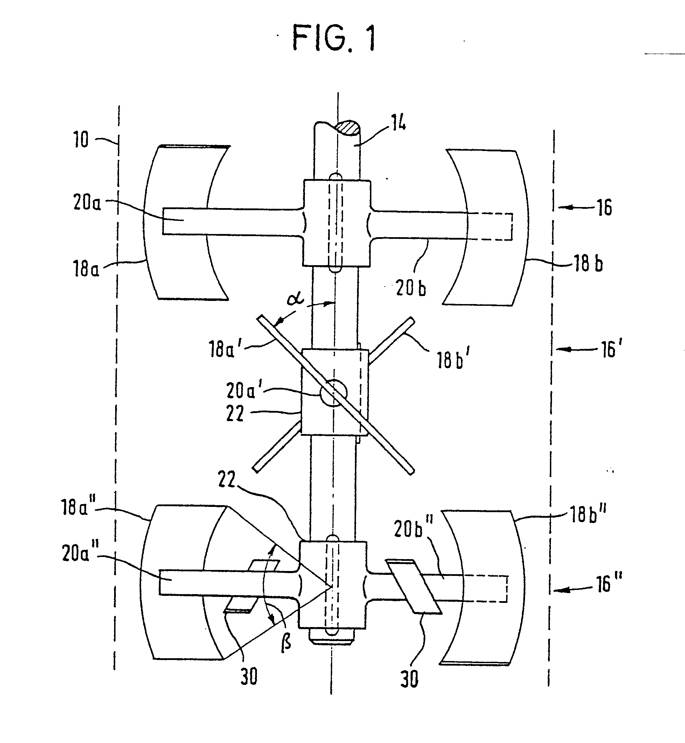

Die in Fig. 1 teilweise dargestellte Vorrichtung umfaßt einen schematisch angedeuteten Behälter 10 und eine motorisch angetriebene Rührwelle 14, auf der Naben 22 sitzen, die beispielsweise drei Rührwerkzeuge 16, 16', 16'' halten. Diese bestehen aus Paaren von blattförmigen Elementen oder Paletten 18a, 18b; 18a', 18b'; 18a'', 18b'', welche von Radialarmen 20a, 20b; 20a', 20b'; 20a'', 20b'' getragen und verhältnismäßig nahe der Behälterwand angeordnet sin. Die einzelnen Paletten (18) stehen unter einem Anstellwinkel α zur Achse der Rührwelle 14. Sie sind allgemein bogenförmig mit einem Zentriwinkel im Bereich zwischen etwa 90 und 150°, vorzugsweise bei 120°. Durch die Bemessung der Paletten (18) und den Anstellwinkel α läßt sich die Rührwirkung nach Bedarf einstellen. Sie wird zusätzlich unterstutzt durch weitere Segmente 30, die im Beispiel der Fig. 1 an den Radialarmen 20a'', 20b'' des untersten Rührwerkzeugs 16'' befestigt sind, und zwar bevorzugt unter einem anderen (nicht eingezeichneten) Anstellwinkel als die Haupt-Paletten 18a', 18b'.

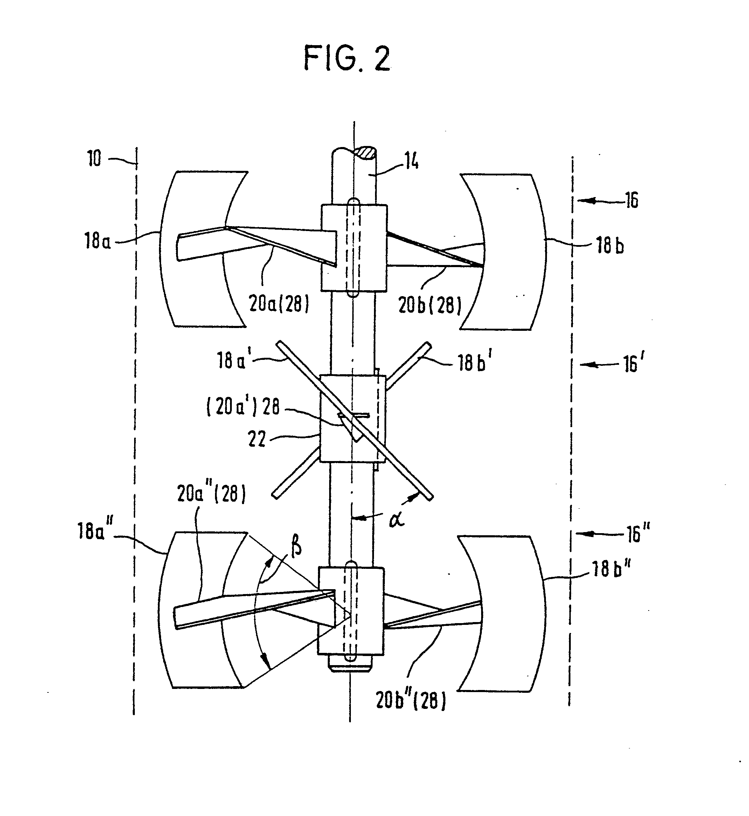

Die in Fig. 2 dargestellte Ausführungsform entspricht grundsätzlich dem Beispiel von Fig. 1, doch sind die Radialarme (20) hier als Faltprofilleisten bzw. Winkelstreben 28 des Typs ausgebildet, welcher in der AT-PS 358 537 im einzelnen beschrieben ist. Hierdurch sind die Radialarme selbst ebenfalls Rührelemente, wobei deren Anordnung, Flächenbemessung und Förderwirkung je nach dem Anwendungsfall gestaltet werden kann.

Während bei den Ausführungsbeispielen von Fig. 1 und 2 die Rührwerkzeuge 16, 16', 16''

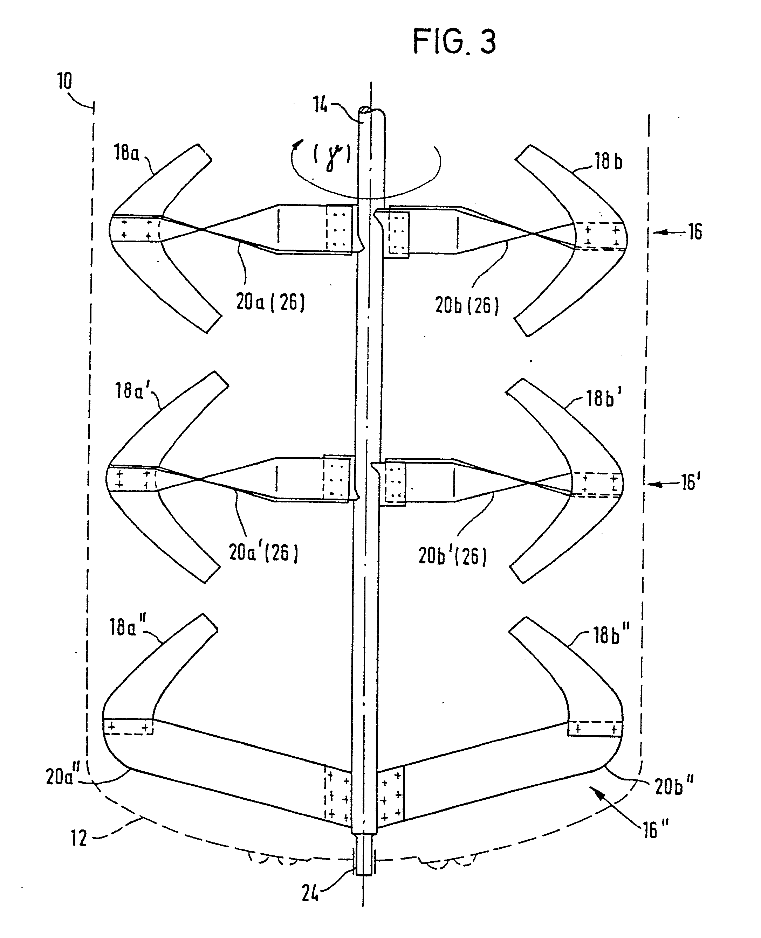

zueinander kreuzweise angeordnet sind, zeig; Fig. 3 ein Beispiel, bei dem sämtliche Radialarme (20) zueinander parallel verlaufen, d.h. mit einem Azimut $\gamma$ =0. in diesem Falle sind die Radialarme der beiden oberen Rührwerkzeuge 16, 16' als Winkelsegmente 26 ausgebildet, an deren verwundenen Enden die blattförmigen Elemente 18 sitzen. Letzere sind hier Wendelsegmente, deren Anstellwinkel und Bemessung vorzugsweise so gewählt ist, daß sich schräg gegenuberstehende Wendelsegmente (z.B. 18a, 18b', 18a''; 18b'', 18a', 18b) Teile wenigstens eines vollständigen Wendelganges bilden. Hierbei ist es möglich und erfindungsgemäß vorgesehen, daß die einzelnen Wendelsegmente (18) verwundene Flächen haben, doch ist es für einfachere Ausführungsformen auch möglich, ebene Bogensegmente vorzusehen, welche die Wendelsgestalt annähernd verwirklichen oder ersetzen. Nahe dem Boden 12 des Behälters 10 kann ed genügen, Radialarme 20a'', 20b'' in Form ebener Balken vorzusehen, die eine Unlaufströmung erzeugen. Bei hinreichend niedriger Drehzahl ist es möglich und günstig, am Boden 12 ein Spurlager 24 für die Rührwelle 14 anzuordnen.

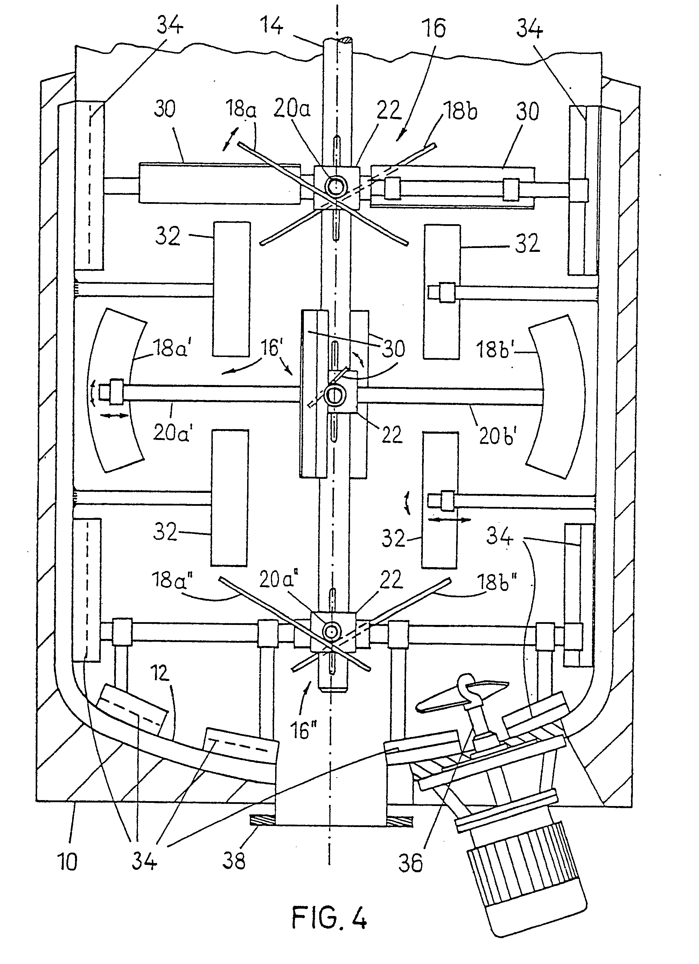

Noch ein anderes Ausführungsbeispiel zeigt Fig. 4. Hierbei sind wiederum mehrere Rührwerkzeuge 16, 16', 16'' übereinander auf der Rührwelle 14 angeordnet, die in diesem Falle durch den am (nicht dargestellten) Oberteil des Behälters 10 befindlichen Antrieb fliegend gelagert ist. An den Radialarmen (20) sind Wiederum Bogensegmente (18) unter verschiedenem Anstellwinkel zur Achse der Rührwelle 14 angebracht. Weitere Segmente 30 können in unterschiedlichen Winkeln und Abständen zur Rührwelle 14 an den Radialarmen (20) befestigt sein; man erkennt, daß am oberen Rührwerkzeug 16 zusätzlich senkrechte Segmente 30 angebracht sind. Außer-dem können die Radialarme (20) außen Abstreifer 34 tragen, die an der Innenwand des behälters 10 bzw. seines Bodens 12 entlangfahren. Feststehende Strömungsbrecher in Gestalt von Leitblechen 32 können zwischen den einzelnen Rührwerkzeugen angeordnet sein. Sie tragen ebenso wie ein am Boden 12 befindlicher Schnellauf-Propellerrührer 36 dazu bei, die bloße Umwälzung des Rührgutes zu verhindern und seine Verwirbelung auch Inneren des Behälters 10 zu Gewährleisten.

In den Rahmen der Erfindung fallen verschiedene Weiterbildungen und Abwandlungen. So ist es möglich, die Bogen- bzw. Wendelsegmente (18) auf unterschiedlichen Radien zur Rührwelle 14 anzuordnen. Dadurch werden unterbrochene Doppel- oder Mehrfachwendeln gebildet, die bei vereinfachtem Aufbau erheblich geringeren Massen weitgehend die Wirkung normaler Wendelrührer haben. Je nach Anstellwinkel bzw. Steigerung der einzelnen blattförmigen Elemente können Rührwirkung und Leistungsaufnahme auf die verschiedensten Anwendungsfälle abgestimmt werden.Auf diese Weise läßt sich das Betriebsverhalten nach Bedarf zwishen den Grenzfällen eines Ankerrührers und eines Steilpropellers mit gleitenden Übergängen einstellen.

## Patentansprüche

1. Vorrichtung zum Rühren von festen und flüssigen oder fließ-fähigen Stoffen, mit einem stehenden Behälter (10), mit einer dort hineinragenden, angetriebenen Rührwelle (14) und mit wenigstens einem an letzterer im Abstand zum Behölterboden (12) befestigten Rührwerkzeug (16), das an Radialarmen (20) blattförmige Elemente (18) trägt, deren äußere Ränder bogenförmig sind und deren Blattflächen unter einem Anstellwinkel($\alpha$) zur Achse der Rührwelle (14) verlaufen, dadurch gekennzeichnet, daß blattförmigen Elemente (18) Bogensegmente sind, nämlich ebene oder gewölbte Wendelabschnitte oder ebeneb Kreisringausschnitte mit einem Zentriwinkel () zwischen 90° und 150°, vorzugsweise etwa 120°, und daß der bzw. jeder Radialarm (20) als Rührelement ausgebildet ist, insbesondere als Rührbalken, Winkelsegment (26), Faltprofilleiste (28) o.dgl.

2. Vorrichtung nach Anspruch 1, dadurch gekennzeich- net, daß am Radialarm (20) zusätzlich Segmente (30) von Balken-, Blatt- oder Schaufelrührern befestigt bzw. befestigbar sind, namentlich unter einem von den Bogensegmenten (18) abweichenden Anstellwinkel zur Rührwelle (14).

3. Vorrichtung nach Anspruch 1 oder 2, dadurch gekennzeichnet, daß in Umfangsrichtung benachbarte Radialrührelemente (26,28) bzw. zusätxliche Segmente (30) entweder gleichsinnig zur Rührwelle (14) oder abwechselnd gegensinnig zur Rührwelle (14) angestellt sind.

4. Vorrichtung nach einem der Ansprüche 1 bis 3, dadurch gekennzeichnet, daß bei übereinander angeordneten Rührwerkzeugen (16, 16', 16'') jeweils benachbarte Radialrührelemente (26, 29) bzw. zusätzliche Segmente (30) entweder gleichsinnig zur Rührwelle (14) oder abwechselnd gegensinnig zur Rührwelle (14) angestellt sind.

5.Vorrichtung nach wenigstens einem der Ansprüche 1 bis 4, dadurch gekennzeichnet, daß zumindest zwei Rührwerkzeuge (16, 16', 16'') übereinander an der Rührwelle (14) angeordnet sind und daß in den Behälter (10) vorzugsweise am Boden (12), eine zumindest mit dem untersten Rührwerkzeug (16'') zusammenwirkende Verwirbelungseinrichtung (36) eingebaut ist, bevorzugt ein Schnellauf-Propellerrührer.

6. Vorrichtung nach wenigstens eine der Ansprüche 1 bis 5, dadurch gekennzeichnet, daß zumindest einzelne Wendelsegmente (z.B. 18a, 18b') wenigstens genähert Teile einer gemeinsamen Wendelbahn bilden.

7. Vorrichtung nach Anspruch 6, dadurch gekennzeichnet, daß zumindest zwei Wendelsegment radial weiter innen sitzen als alle übrigen und das diese inneren Wendelsegmente wenigstens genähert Teile einer zweiten gemeinsamen Wendelbahn bilden.

8. Vorrichtung nach Anspruch 6 oder 7, dadurch gekennzeichnet, daß zumindest eine Wendelbahn sich in Axialrichtung erweitert, z.B. nach Art einer Konusspirale.

9.Vorrichtung nach wenigstens einem der Ansprüche 1 bis 8, dadurch gekennzeichnet, daß der Anstellwinkel (α) des bzw. jedes Bogensegments (18) zur Rührwlle (14) einstellbar ist.

10. Vorrichtung nac wenigstens einem der Ansprüche 1 bis 9, dadurch gekennzeichnet, daß dem bzw. jedem Rührwerkzeug (16, 16', 16'') wenigstens ein Strömungsbrecher zugeordnet ist, z.B. ein im Behälter (10) fest angeordnetes Leitblech (32), ein Abstreifer (34) o. dgl.

## Claims

1. Stirring device for solid and liquid or free-flowing substances, comprising a vertical vessel (10) with a driven stirring shaft (14) extending into the vessel and with at least one stirring tool (16) mounted on the stirring shaft at a distance to the bottom (12) of the vessel, said stirring tool supporting radial arms (20) that carry blade-like elements (18) whose edges are arc-shaped and whose blade areas are disposed at a pitch angle (α) relative to the axis of the stirring shaft (14), characterized in that the blade-like elements (18) are arc segments, namely plane or arched spiral sections or plane circle segments having a central angle (β) in the range of about 90 to 150 degrees, preferably of about 120 degrees, and wherein each radial arm (20) is designed as a stirring element, especially as a stirring beam, an angle segment (26), a folded profile gib (28) or the like.

2. Stirring device as claimed in claim 1, wherein additional segments (30) of beam-type, blade-type or beater stirrers are mounted or mountable on the radial arm (20), in particular at a pitch angle different from that of the arc-segments (18) relative to the stirring shaft (14).

3. Device as claimed in claim 1 or 2, wherein radial stirring elements (26, 28) or additional segments (30) circumferentially neighbouring each other are arranged so that their pitch angles either correspond to the sense of the stirring shaft (14) or alternate therewith.

4. Device as claimed in any of claims 1 to 3, wherein in an array of stirrin tools (16, 16', 16'') arranged on top of each other, neighbouring radial stirring elements (26, 29) and/or additional segments (30) are arranged so that their pitch angles either correspond to the sense of the stirring shaft (14) or alternate therewith.

5. Device as claimed in at least one of claims 1 to 4, wherein at least two stirring tools (16, 16', 16'') are arranged on the stirring shaft (14) on top of each other and wherein the vessel (10) is, in particular at its bottom (12), provided with a whirling device (36), preferably a high-speed mixing propeller, which assists at least the lowest stirring tool (16'').

6. Device as claimed in at least one of claims 1 to 5, wherein at least some single spiral segments (e.g. 18a, 18b') at least approximately form portions of a common spiral path.

7. Device as claimed in claim 6, wherein at least two spiral segments are seated radially further inside than all others and wherein these inner spiral segments at least approximately form portions of a second common spiral path.

8. Device as claimed in claims 6 and 7, wherein at least one spiral path expands in axial direction, e.g. like a conical spiral.

9. Device as claimed in at least one of claimes 1 to 8, wherein the pitch angle (α) of each arc segment (18) is adjustable relative to the stirring shaft (14).

10. Device as claimed in at least one of claims 1 to 9, wherein at least one flow breaker, e.g. a baffle (32) mounted firmly inside the vessel, a stripper (34) or the like is associated to the stirring tool or to each one of them (16, 16', 16'').

## Revendication

1. Dispositif mélangeur pour agiter des substances solides liquides ou coulantes, avec un récipient vertical (10), un arbre agitateur entraîné (14) entrant dans le récipient, et avec au moins un outil agitateur (16) fixé sur l'arbre (14) à une distance par rapport au fond du récipient (12), l'outil (16) portant sur des bras radiaux (20) des éléments en forme de pales (18) dont les bords extérieurs ont la forme d'arcs et dont les surfaces sont orientées sous un angle d'incidence (α) par rapport à l'axe de l'arbre agitateur (14), caractérisé en ce que les éléments en forme de pales (18) sont des segments d'arc, en l'espèce des segments d'hélice plats ou courbes ou des segments d'anneau de cercle avec un angle au centre (β) entre 90° et 150°, de préférence environ 120°, et en ce que le ou chaque bras radial (20) est configuré comme élément agitateur, particulièrement comme barre agitatrice, segment d'angle (26), baguette en profil plié (28) et similiaires.

2. Dispositif suivant la revendication 1, caractérisé en ce que sur le bras radial (20) sont respectivement fixés ou fixables de façon supplémentaire des segments (30) d'agitateurs à barre, à pales ou turbinaires, en particulier sous un angle d'incidence par rapport à l'arbre agitateur (14) différent de celui des segments d'arc (18).

3. Dispositif suivant la revendication 1 ou 2, caractérisé en ce que des éléments agitateurs radiaux avoisinants en direction de la circonférence (26, 28) respectivement des segments supplémentaires (30) sont disposés ou bien en même sens par rapport à l'arbre agitateur (14), ou bien alternativement en sens inverse par rapport à l'arbre agitateur (14).

4. Dispositif suivant une des revendications de 1 à 3, caractérisé en ce que pour des agitateurs disposés l'un au-dessus de l'autre (16, 16', 16''), des éléments agitateurs radiaux avoisinants entre eux (26, 29) respectivement des segments supplémentaires (30) sont disposés ou bien en même sens par rapport à l'arbre agitateur (14), ou bien alternativement en sens inverse par rapport à l'arbre agitateur (14).

5. Dispositif suivant au moins une des revendications de 1 à 4, caractérisé en ce qu'au moins deux outils agitateurs (16, 16', 16'') sont disposés sur l'arbre agitateur (14) l'un au-dessus de l'autre, et que dans le récipient (10), de préférence sur le fond (12), est installé un dispositif tourbillonnant (36) concourant au moins avec l'outil agitateur le plus bas (16''), le dispositif tourbillonnant (36) étant de préférence un agitateur à hélice à grande vitesse.

6. Dispositif suivant au moins une des revendications de 1 à 5, caractérisé en ce qu'au moins quelques-uns des segments d'hélice (p. ex: 18a, 18b') forment, au moins de façon approximative, des parties d'une trajectoire d'hélice commune.

7. Dispositif suivant la revendication 6, caractérisé en ce que au moins deux segments d'hélice se trouvent par rapport à tous les autres radialement plus à l'intérieur, et que ces segments d'hélice intérieurs forment, au moins de façon approximative, des parties d'une deuxième trajectoire d'hélice commune.

8. Dispositif suivant la revendication 6 ou 7, caractérisé en ce qu,au moins une trajectoire d'hélice s'élargit en sens axial, p. ex. en forme d'une spirale conique.

9. Dispositif suivant au moins une des revendications 1 à 8, caractérisé en ce que l'angle d'inclinaison ($\alpha$) du ou de chaque segment d'arc (18) peut être réglé par rapport à l'arbre agitateur (14).

10. Dispositif suivant au moins une des revendications 1 à 9, caractérisé en ce que à l'outil ou à chaque outil agitateur (16, 16' 16'') est associé au moins un briseur de courant, p. ex. un déflecteur (32) disposé de manière stable dans le récipient (10), un racleur (34) ou un dispositif similaire.

# FIG. 1

# FIG. 2

# FIG. 3

FIG. 4